# EUROPEAN PATENT APPLICATION

(11) **EP 4 421 344 A1**
(43) Date of publication of application: **28.08.2024**
(21) Application number: 23794810.4
(22) Date of filing: 13.03.2023
(51) Int. Cl.: F16D 65/095, F16D 65/18, B60T 13/74

(54) **BRAKE MECHANISM, MECHANICAL BRAKE, ELECTROMECHANICAL BRAKE SYSTEM, AND VEHICLE**

(30) Priority: 26.04.2022 CN 202210451605
(71) Applicant: Huawei Digital Power Technologies Co., Ltd., Shenzhen, Guangdong 518043 (CN)
(72) Inventor: HE, Yuhui, Shenzhen, Guangdong 518043 (CN); HE, Jianjun, Shenzhen, Guangdong 518043 (CN); NI, Hui, Shenzhen, Guangdong 518043 (CN)
(74) Representative: Maiwald GmbH
(86) International application number: PCT/CN2023/081153
(87) International publication number: WO 2023/207374

(57) **Abstract**

This application provides a braking mechanism, a mechanical brake, an electronic mechanical braking system, and a vehicle. The braking mechanism includes: a fixed caliper; two braking units, where the two braking units are arranged in a first direction, a braking gap used by a part of a brake disc for extending is formed between the two braking units, each braking unit is movably installed on the fixed caliper in the first direction, and the first direction is parallel to an axis direction of the brake disc; two crankshaft units that are in a one-to-one correspondence with the two braking units, where in each group of the braking unit and the crankshaft unit that correspond to each other, the crankshaft unit is located on a side that is of the braking unit and that is away from the braking gap, the crankshaft unit is rotatably installed on the fixed caliper around a first axis, and the first axis is perpendicular to the first direction; and a drive unit, where the drive unit is in transmission connection with the two crankshaft units through a connecting rod assembly, to drive the two crankshaft units to rotate and drive the two braking units to approach each other. The braking mechanism can avoid a reliability risk of the system.

## Description

### CROSS-REFERENCE TO RELATED APPLICATIONS

This application claims priority to Chinese Patent Application No. 202210451605.7, filed with the China National Intellectual Property Administration on April 26, 2022 and entitled "BRAKING MECHANISM, MECHANICAL BRAKE, ELECTRONIC MECHANICAL BRAKING SYSTEM, AND VEHICLE", which is incorporated herein by reference in its entirety.

### TECHNICAL FIELD

This application relates to the field of vehicle braking technologies, and in particular, to a braking mechanism, a mechanical brake, an electronic mechanical braking system, and a vehicle.

### BACKGROUND

Different from a conventional brake in which a friction plate is pushed through hydraulic piston pushing, an electronic mechanical braking (electronic mechanical brake, EMB) system is a brake in which a wheel-end motor is used to push a speed reducer, then push a mechanical structure (for example, a ball screw shaft, a cam mechanism, or a slider crank mechanism) that converts a rotational motion into a linear motion, and finally push a friction plate to generate braking.

In an existing electronic mechanical braking system, a friction plate is fixed to a frame in a floating manner through a caliper, which has a reliability problem.

### SUMMARY

This application provides a braking mechanism, a mechanical brake, an electronic mechanical braking system, and a vehicle. The braking mechanism can avoid a reliability risk of the system.

According to a first aspect, this application provides a braking mechanism. The braking mechanism may be configured to brake a brake disc. The braking mechanism specifically includes a fixed caliper, a drive unit, a braking unit, and a crankshaft unit. There are two braking units. The two braking units are arranged in a first direction, and a braking gap can be formed between the two braking units. The braking gap can be used by a part of the brake disc for extending. Each braking unit is movably installed on the fixed caliper in the first direction. The first direction herein is parallel to an axis direction of the brake disc. There are also two crankshaft units. The two braking units are in a one-to-one correspondence with the two crankshaft units. In each group of the crankshaft unit and the braking unit that correspond to each other, the crankshaft unit is located on a side that is of the braking unit and that is away from the braking gap, and the crankshaft unit is rotatably installed on the fixed caliper around a first axis. The drive unit is fixed to the fixed caliper, and the drive unit is in transmission connection with the two crankshaft units through a connecting rod assembly, to drive the two crankshaft units to rotate at the same time. When the two crankshaft units rotate, the two braking units can be driven to move oppositely at the same time to approach each other. When a vehicle brakes, the drive unit drives, through the connecting rod assembly, the two crankshaft units to rotate around first axes of the two crankshaft units, and drives the two braking units to approach each other, so that the two braking units can clamp the brake disc in the braking gap to implement braking. The braking mechanism has a simple structure, and can implement pure mechanical braking. The fixed caliper is fixed relative to the vehicle. The braking unit, the drive unit, and the crankshaft unit are all installed on or fixed to the fixed caliper. In addition, the two braking units can be driven by two crankshaft units respectively, so that a more stable clamping braking process is performed on the brake disc, and reliability of the structure is higher.

The connecting rod assembly specifically includes a transmission pair, a connecting rod, a yoke lever, and a balance bar that are in transmission connection each other in sequence. The balance bar is rotatable around a second axis, and is movably installed on the fixed caliper in a second direction. Two ends of the balance bar are respectively hinged to the two crankshaft units, so that when moving in the second direction or rotating around the second axis, the balance bar can simultaneously drive the two crankshaft units to rotate. The second axis is parallel to the first axis, and the second axis can move relative to the fixed caliper. The second direction is perpendicular to the first direction. The yoke lever is rotatably installed on the fixed caliper around a third axis. The third axis is parallel to the first axis, and a position of the third axis is fixed relative to a position of the fixed caliper. The yoke lever is hinged to the balance bar, and a hinged point between the balance bar and the yoke lever coincides with the second axis. One end of the transmission pair is in transmission connection with a power-take-off end of the drive unit, and the other end is hinged to the yoke lever through the connecting rod. Power of the drive unit may be transferred to the balance bar through the transmission pair, the connecting rod, and the yoke lever, and then distributed by the balance bar to the two crankshaft units. Because the balance bar can rotate around the second axis, the balance bar can adjust, through rotation, the power distributed to the two crankshaft units, so that reasonable power is exerted on the two crankshaft units, and power finally transferred to the braking unit remains equal. This protects the braking unit and the fixed caliper.

The balance bar and the fixed caliper are connected through a first resilient element. During a braking operation, the balance bar can be driven by the drive unit to move in the second direction. When the drive unit stops braking, the balance bar can be reset by the first resilient element.

To connect the two crankshaft units, the balance bar has two symmetrical connecting arms, and each connecting arm is configured to correspondingly connect one crankshaft unit. In other words, the balance bar can drive the two crankshaft units by using the two connecting arms. Distances between the second axis and hinged points of the two connecting arms and the corresponding crankshaft units are equal, so that the balance bar can evenly distribute a driving force to the two crankshaft units.

Specifically, between the connecting arm and the crankshaft unit that are hinged to each other, the connecting arm has a hinged semi-ring, the crankshaft unit has a hinged flange, and the hinged flange rotates and cooperates with an inner surface of the hinged semi-ring.

In some possible implementations, the drive unit includes a motor and a speed reducer. The motor is fixed to the fixed caliper. The speed reducer is in transmission connection with a power output shaft of the motor, and the speed reducer is in transmission connection with the transmission pair. Based on the drive unit, the transmission pair needs to be capable of implementing an effect of converting a rotational motion into a linear motion. Therefore, the transmission pair may be a gear rack assembly or a worm gear assembly. An included angle between a rotation center of the power output shaft of the motor and the first direction of the brake disc is greater than or equal to 70°. The arrangement manner can save space, and facilitate installation and arrangement at a wheel end.

In some possible implementations, the crankshaft unit includes a transmission arm, a rotation shaft, and a cam. The rotation shaft is rotatably installed on the fixed caliper around the first axis, and an axis of the rotation shaft can coincide with the first axis. One end of the transmission arm is fixed to the rotation shaft, and the other end is hinged to the balance bar of the connecting rod assembly. The balance bar can drive, by driving the transmission arm, the rotation shaft to rotate. The cam is fixed to the rotation shaft, and can rotate around the first axis together with the rotation shaft, and a circumferential surface of the cam presses against the braking unit. A geometric center of the cam is parallel to the first axis, and there is a preset distance between the geometric center of the cam and the first axis, so that the braking unit in contact with the circumferential surface of the cam can generate a linear motion with rotation of the cam.

In some possible implementations, the braking unit includes a gain bridge and a friction plate. The gain bridge is movably installed on the fixed caliper in the first direction, and the friction plate is fixed to a side that is of the gain bridge and that faces the braking gap. The crankshaft unit presses against a side that is of the gain bridge and that is away from the friction plate. When the crankshaft unit is driven to rotate, the cam on the crankshaft unit can drive the gain bridge to move towards the side of the braking gap. When the two braking units are simultaneously driven, the two braking units approach each other, and the two friction plates can clamp the brake disc in the braking gap to implement braking.

When the vehicle brakes, the drive unit drives, through the connecting rod assembly, the two crankshaft units to rotate, and drives the two braking units to approach each other, so that the two friction plates can clamp the brake disc to implement braking. When the vehicle stops braking, the two braking units need to be away from each other. Therefore, a second resilient element is connected between the two braking units. When the two braking units approach each other, the second resilient element accumulates energy to generate elastic potential energy. When the vehicle stops braking, the driving force of the drive unit disappears, and the two braking units can be driven by the second resilient element to be away from each other, to restore the original braking gap.

In some possible implementations, a gain component is disposed between each braking unit and the fixed caliper. Specifically, the gain component includes a first V-shaped groove, a second V-shaped groove, and a rolling element. The first V-shaped groove is disposed on a side that is of the braking unit and that faces the fixed caliper, the second V-shaped groove is disposed on a side that is of the fixed caliper and that faces the braking unit, and the rolling element is disposed between the first V-shaped groove and the second V-shaped groove. When the braking unit clamps the brake disc, the gain bridge is reversely acted by the brake disc and has a trend of moving in the second direction, the gain bridge moves in the second direction relative to the fixed caliper, and the rolling element can roll between the first V-shaped groove and the second V-shaped groove, so that the gain bridge further exerts a force on the friction plate, and the friction plate generates a greater clamping force on the brake disc, to reduce a power requirement and a current requirement of the motor.

According to a second aspect, this application further provides a mechanical brake. The mechanical brake includes a brake disc and any braking mechanism provided in the foregoing technical solutions. A part of the brake disc extends into a fixed caliper, and is located in a braking gap between two braking units. A drive unit drives, through a connecting rod assembly, two crankshaft units to drive the two braking units to approach each other to clamp the brake disc, so that mechanical braking is implemented.

According to a third aspect, this application further provides an electronic mechanical braking system. The electronic mechanical braking system includes a braking pedal, an electronic braking mechanism, a switching mechanism, and the foregoing mechanical brake. The electronic braking mechanism is signal-connected to each of the braking pedal, the mechanical brake, and the switching mechanism, to control braking of the mechanical brake based on signals of the braking pedal and the switching mechanism. When the electronic braking mechanism cannot work normally, the mechanical brake can brake a traveling vehicle, to ensure safety performance of the traveling vehicle. In addition, a structure of the electronic mechanical braking system is more reliable and stable during braking, so that zero drag can be implemented.

According to a fourth aspect, this application further provides a vehicle. The vehicle includes a vehicle body, wheel hubs, and the foregoing electronic mechanical braking system. A fixed caliper is fixed to the vehicle body, and a brake disc is fixed to a wheel hub. The vehicle can achieve all beneficial effects of the foregoing electronic mechanical braking system.

### BRIEF DESCRIPTION OF DRAWINGS

FIG. 1 is a schematic diagram of a structure of a mechanical brake according to an embodiment of this application;
FIG. 2 is a schematic diagram of a structure of a braking mechanism according to an embodiment of this application;
FIG. 3 is a schematic diagram of a structure of a transmission pair in a braking mechanism according to an embodiment of this application;
FIG. 4 is a schematic diagram of a partial structure of a connecting rod assembly in a braking mechanism according to an embodiment of this application;
FIG. 5 is a schematic diagram of a partial structure of a braking mechanism according to an embodiment of this application;
FIG. 6 is a top view of a partial structure of a braking mechanism according to an embodiment of this application;
FIG. 7 is a schematic diagram of a partial structure of a crankshaft unit in a braking mechanism according to an embodiment of this application;
FIG. 8 is a schematic diagram of a principle in which a cam of a crankshaft unit in a braking mechanism drives a braking unit to move according to an embodiment of this application;
FIG. 9 is a schematic diagram of a structure of a braking unit in a braking mechanism according to an embodiment of this application;
FIG. 10 is a schematic diagram of a structure of a fixed caliper in a braking mechanism according to an embodiment of this application;
FIG. 11 is an exploded view of a braking mechanism according to an embodiment of this application;
FIG. 12 is a left view of a braking mechanism according to an embodiment of this application;
FIG. 13 is a schematic diagram of a cross-sectional structure of A-A in FIG. 12;
FIG. 14 is an enlarged view of a part B in FIG. 13;
FIG. 15 is a schematic diagram of a structure of an electronic mechanical braking system according to an embodiment of this application; and
FIG. 16 is a schematic diagram of a structure of a vehicle according to an embodiment of this application.

Reference numeral: 1-fixed caliper; 11-side panel; 12-top panel; 121-mounting hole; 122-sliding slot; 123-rotating shaft; 13-front panel; 14-second gain block; 2-drive unit; 21-motor; 22-speed reducer; 3-braking unit; 31-gain bridge; 311-first gain block; 32-friction plate; 4-crankshaft unit; 41-transmission arm; 42-rotation shaft; 43-cam; 5-connecting rod assembly; 51-transmission pair; 511-transmission gear; 5111-shaft hole; 512-transmission rack; 5121-connecting post; 52-connecting rod; 521-connecting hole; 53-yoke lever; 531-hinge hole; 54-balance bar; 541-connecting arm; 61-first resilient element; 62-second resilient element; 7-hinged shaft; 8-rolling element; 10-braking mechanism; 20-brake disc; 100-mechanical brake; 200-braking pedal; 300-switching mechanism; 400-electronic braking mechanism; 401-controller; 402-electronic signal sensor; 403-feedback mechanism; 500-vehicle; and 501-wheel hub.

### DESCRIPTION OF EMBODIMENTS

An electronic mechanical braking system may be used for vehicle braking. A friction plate is pushed, so that the friction plate presses against a brake disc fixed to a wheel hub, to generate a friction force for braking the brake disc. In this way, a wheel is locked, so that vehicle braking is implemented. In a current mechanical braking system, a caliper configured to install the friction plate is of a floating structure, which is unreliable.

Based on this, embodiments of this application provide a mechanical braking mechanism, a mechanical brake, an electronic mechanical braking system, and a vehicle. The mechanical braking mechanism uses a fixed caliper structure, which can improve reliability of the system.

To make objectives, technical solutions, and advantages of this application clearer, the following further describes this application in detail with reference to the accompanying drawings.

Terms used in the following embodiments are merely intended to describe particular embodiments, but are not intended to limit this application. The terms "one", "a", "the", and "this" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

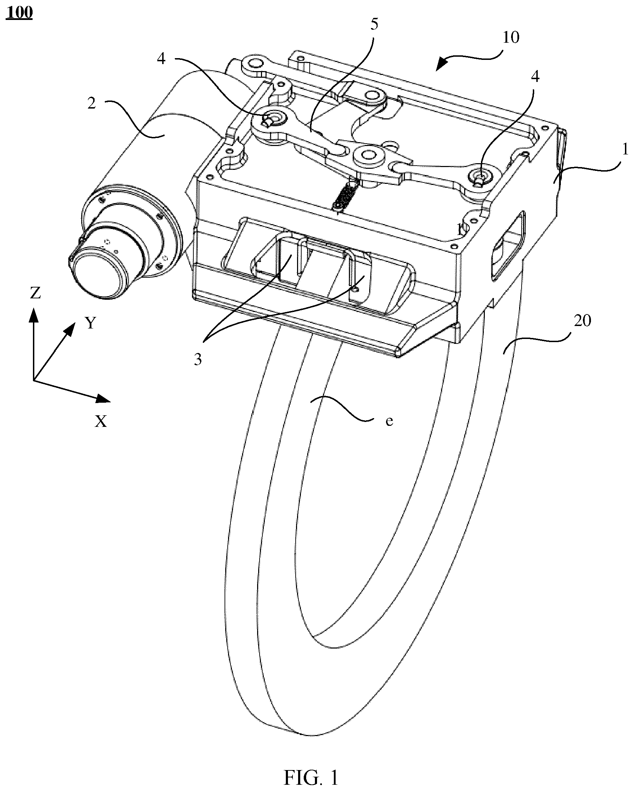

As shown in FIG. 1, an embodiment of this application provides a mechanical brake. The mechanical brake may be applied to an electronic mechanical braking system of a vehicle to perform mechanical braking on wheels. The mechanical brake includes a braking mechanism 10 and a brake disc 20. The braking mechanism 10 includes a fixed caliper 1, a drive unit 2, two braking units 3, and two crankshaft units 4. During application, the fixed caliper 1 can be fixed to a frame of the vehicle, and is kept relatively fixed to the frame. During vehicle braking, the fixed caliper 1 does not change a structure or move a position. A first direction X, a second direction Y, and a third direction Z are defined by using the structure of the fixed caliper 1 as a reference. The two braking units 3 can be arranged in internal space of the fixed caliper 1 in the first direction X, and a braking gap W can be formed between the two braking units 3. The braking gap W can be used by a part of the brake disc 20 for extending. When braking needs to be performed on the brake disc 20, the drive unit 2 drives, through the connecting rod assembly 5, the two crankshaft units 4 to drive the two braking units 3 to approach each other in the first direction X, and the two braking units 3 can clamp the brake disc 20. A friction force is generated between the brake disc 20 in a rotating state or a rotating trend and the two braking units 3. When the friction force is large enough, the brake disc 20 can be prevented from rotating until the brake disc 20 remains stationary relative to the fixed caliper 1, so that braking is implemented on the brake disc 20. It should be understood that the braking gap W between the two braking units 3 is used by a part of the brake disc 20 for extending, and the two braking units 3 are arranged in the first direction X, and can approach each other in the first direction X to clamp the brake disc 20. The first direction X herein is perpendicular to two surfaces e of the brake disc 20 (where only one surface e is shown herein due to a limited angle of view). The two surfaces e respectively face the two braking units 3, and each surface e is parallel to the second direction Y and the third direction Z in FIG. 1. When the two braking units 3 clamp the brake disc 20, the two braking units 3 contact the two surfaces e of the brake disc 20 in a one-to-one correspondence.

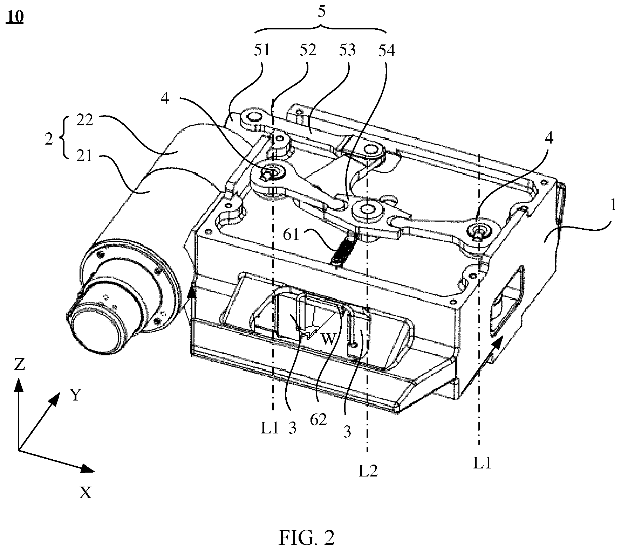

Refer to a structure of the braking mechanism 10 shown in FIG. 2. The drive unit 2 specifically includes a motor 21 and a speed reducer 22. The motor 21 is fixed to the fixed caliper 1. The two crankshaft units 4 are also arranged in the first direction X, and each crankshaft unit 4 is rotatably installed on the fixed caliper 1 around a first axis L1. A power output shaft of the motor 21 is in transmission connection with the speed reducer 22. A take-off end of the speed reducer 22 is driven by the connecting rod assembly 5 to connect the two crankshaft units 4 for rotation. The two crankshaft units 4 can be simultaneously driven by the connecting rod assembly 5 to rotate, but rotation directions of the two crankshaft units 4 are opposite. Certainly, each crankshaft unit 4 has a corresponding first axis L1. The first axis L1 herein is parallel to the third direction Z. In this case, the first axis L1 is perpendicular to the first direction X and the second direction Y. The two braking units 3 are arranged inside the fixed caliper 1 in the first direction X, and can move in the first direction X at the same time to approach or be away from each other. The two crankshaft units 4 are in a one-to-one correspondence with the two braking units 3. When the drive unit 2 drives, through the connecting rod assembly 5, the two crankshaft units 4 to rotate at the same time, the two crankshaft units 4 can drive the two braking units 3, so that the two braking units 3 move oppositely in the first direction X to approach each other. A second resilient element 62 is further connected between the two braking units 3, to drive the two braking units 3 to reset in a non-braking state and maintain the braking gap W.

Still refer to FIG. 2. The connecting rod assembly 5 in this embodiment of this application specifically includes a transmission pair 51, a connecting rod 52, a yoke lever 53, and a balance bar 54 that are in transmission connection with each other in sequence. A driving force output by the motor 21 is transferred to the balance bar 54 through the speed reducer 22, the transmission pair 51, the connecting rod 52, and the yoke lever 53, and the balance bar 54 drives the two crankshaft units 4 to rotate. The balance bar 54 can implement a linear motion relative to the fixed caliper 1 in the second direction Y, and a first resilient element 61 is connected between the balance bar 54 and the fixed caliper 1. The first resilient element 61 may be specifically a spring. When the braking mechanism 10 is in a braking state, and drives the balance bar 54 to implement the linear motion relative to the fixed caliper 1, the first resilient element 61 has elastic potential energy for driving the balance bar 54 to reset. The balance bar 54 can further rotate around the second axis L2 relative to the fixed caliper 1, where the second axis L2 is parallel to the third direction Z, and the second axis L1 is parallel to the first axis L1.

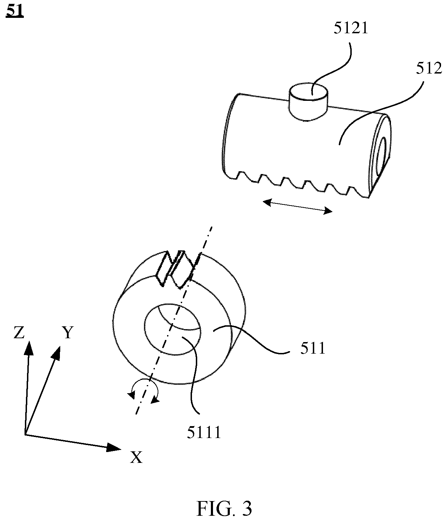

In a power-take-off manner of the motor 21, the transmission pair 51 can convert, into a linear motion, a rotational motion output by the motor 21 through the speed reducer 22. In this embodiment of this application, a rotation center of the rotational motion output by the motor 21 through the speed reducer 22 is parallel to the second direction Y The transmission pair 51 can convert the rotational motion into the linear motion parallel to the first direction X. The transmission pair 51 herein may be a gear rack pair shown in FIG. 3. In other words, the transmission pair 51 includes a transmission gear 511 and a transmission rack 512. The transmission gear 511 is coaxially fixed to a take-off shaft of the speed reducer 22 by using a shaft hole 5111, so that the transmission gear 511 can rotate coaxially with the speed reducer 22, and a rotation center of the transmission gear 511 is parallel to the second direction Y The transmission gear 511 is provided with a gear tooth part in a circumferential direction (where only a partial gear tooth part is shown herein), and the transmission rack 512 is provided with a gear tooth part in a linear direction, where the gear tooth part of the transmission gear 511 is engaged with the gear tooth part of the transmission rack 512. When the transmission gear 511 rotates with the speed reducer 22, the transmission rack 512 implements a linear motion in a direction parallel to the first direction X. A connecting post 5121 is disposed on the transmission rack 512, where the connecting post 5121 is configured to connect the connecting rod 52.

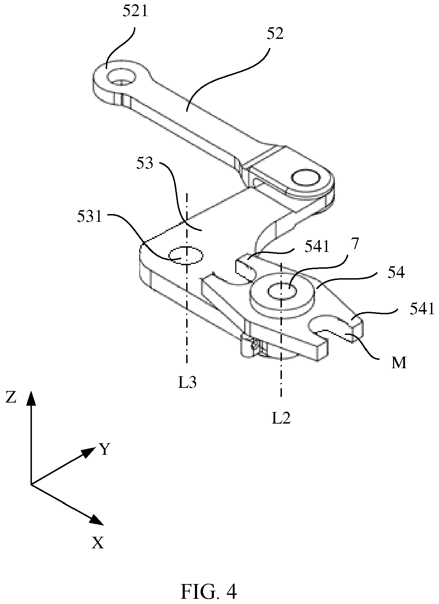

For structures of the connecting rod 52, the yoke lever 53, and the balance bar 54, refer to FIG. 4. The connecting rod 51 is in a long strip shape, and one end of the connecting rod 51 is provided with a connecting hole 521, where the connecting hole 521 can be hinged to the connecting post 5121 on the transmission rack 512. The transmission rack 512 can drive one end of the connecting rod 52 having the connecting hole 521 to implement a linear motion. The other end of the connecting rod 52 is hinged to the yoke lever 53. The connecting rod 52 can be hinged to the yoke lever 53 in a manner in which a hole shaft of the connecting rod 52 rotates and cooperates with a hole shaft of the yoke lever 53. The yoke lever 53 has a yoke lever hinge hole 531, and an axis of the hinge hole 531 forms a rotation center of the yoke lever 53. The axis of the hinge hole 531 is defined as a third axis L3, and the third axis L3 is parallel to the first axis L1. The yoke lever 53 can rotate around the third axis L3. One end of the yoke lever 53 is hinged to the connecting rod 52, and the other end is connected to the balance bar 54. A hinged shaft 7 is installed on the balance bar 54, and the balance bar 54 can rotate around the hinged shaft 7. An axis of the hinged shaft 7 coincides with the second axis L2. A hinged center of the yoke lever 53 and the balance bar 54 coincides with the second axis L2. In this way, when the yoke lever 53 drives the balance bar 54 to implement a linear motion, the balance bar 54 can further rotate around the second axis L2. The balance bar 54 has two connecting arms 541 that are centrosymmetric with respect to the second axis L2, and each connecting arm 541 is configured to be correspondingly hinged to one crankshaft unit 4. One of the connecting arms 541 is used as an example. A hinged semi-ring M is formed at an end of the connecting arm 541, and the hinged semi-ring M has an arc-shaped inner wall.

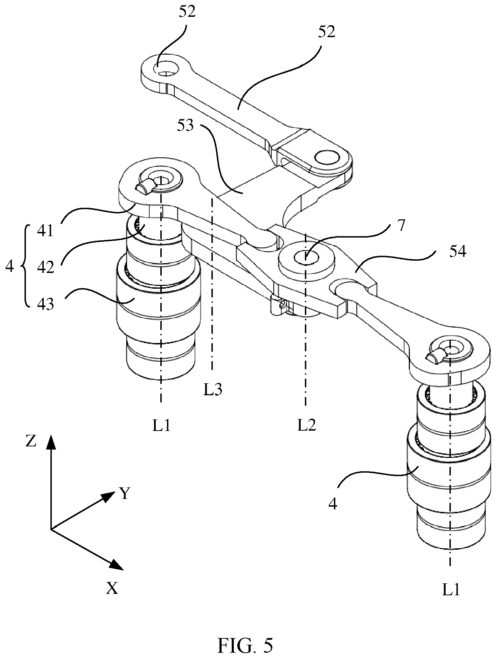

As shown in FIG. 5, each connecting arm of the balance bar 54 is correspondingly hinged to one crankshaft unit 4. One of the crankshaft units 4 is used as an example. The crankshaft unit 4 includes a transmission arm 41, a rotation shaft 42, and a cam 43. The rotation shaft 42 can rotate around an axis of the rotation shaft 42, and the axis of the rotation shaft 42 coincides with the first axis L1. One end of the transmission arm 41 is fixed to the rotation shaft 42, and the other end forms a hinged flange N. The hinged flange N can extend into the hinged semi-ring M of the connecting arm 541, to rotate and cooperate with the inner wall of the hinged semi-ring M. The cam 43 is coaxially fixed to the rotation shaft 42, so that the cam 43 can rotate around the first axis L1 together with the rotation shaft 42. A geometric center of the cam 43 is offset relative to the first axis L1, so that when the cam 43 rotates around the first axis L1, a rotational motion can be converted into a linear motion. With reference to coordinates shown in FIG. 5, it can be learned that the cam 43 can convert a rotational motion of the cam 43 into a linear motion parallel to the first direction X and the second direction Y. It should be understood that, in a movement process of the connecting rod assembly 5, positions of the first axis L1 and the third axis L3 remain fixed relative to a position of the fixed caliper 1, and the second axis L2 may change relative to the fixed caliper 1.

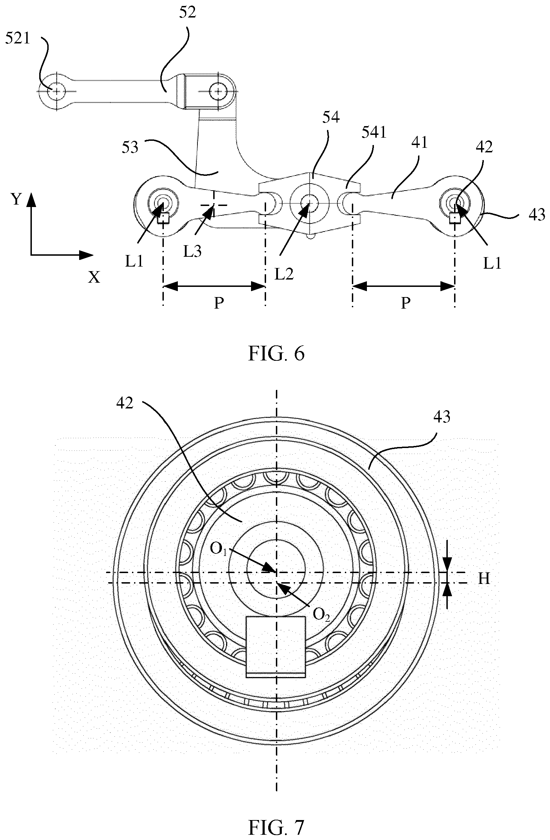

In a top view shown in FIG. 6, the fixed caliper 1 is used as a reference, and the motor 21 drives, through the speed reducer 22 and the transmission pair 51, one end of the connecting rod 52 having the connecting hole 521 to implement a linear motion. The connecting rod 52 drives the yoke lever 53 to rotate around the third axis L3, and rotation of the yoke lever 53 drives the balance bar 54 to implement a linear motion in the second direction Y The linear motion of the balance bar 54 in the second direction Y can drive the transmission arms 41 of the two crankshaft units 4 to rotate around corresponding first axes L1, and drive the rotation shaft 42 and the cam 43 to rotate around the corresponding first axis L1. In any crankshaft unit 4, a distance between the first axis L3 and a hinged point between the transmission arm 41 and the balance bar 54 is P. In other words, transmission distances between the two crankshaft units 4 and the balance bar 54 are equal. In this way, the balance bar 54 can evenly distribute power to the two crankshaft units 4. Herein, the balance bar 54 can further rotate around a second rotating shaft L2, so that the balance bar 54 can adjust rotation angles of the two crankshaft units 4.

For top views of the rotation shaft 42 and the cam 43, refer to FIG. 7. A position of an axis of the rotation shaft 42 is O₁ (namely, a position of the first axis L1), a plane that is of the cam 43 and that is perpendicular to the axis of the rotation shaft 42 is a circle, a position of a circle center is O₂, and a rotation center of the cam 43 coincides with O₁. In a structure state shown in FIG. 6, there is a set distance H between the axis of the rotation shaft 42 and the geometric center of the cam 43 in the second direction Y. When the rotation shaft 42 rotates around the first axis L1, the cam 43 also rotates around the first axis L1. The first axis L1 is used as a reference. In a rotation process of the cam 43, a position of a structure in contact with a circumferential surface of the cam 43 (where the structure contacts only an edge of the cam 43, and does not rotate with the cam 43) from O₁ changes, that is, the cam 43 can convert a rotational motion into a linear motion of the structure in contact with the circumferential surface of the cam 43.

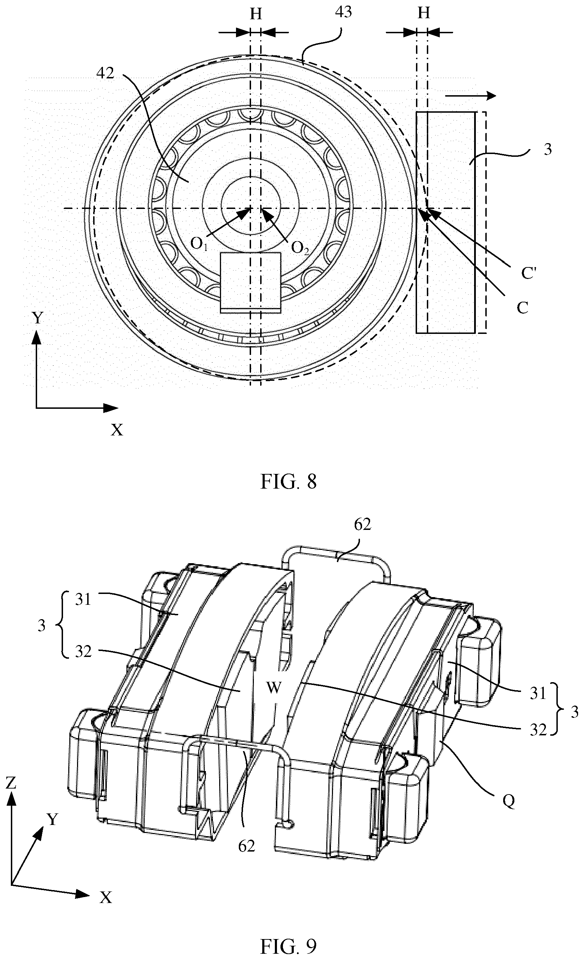

As shown in FIG. 8, in this embodiment of this application, the cam 43 is set to be in contact with the braking unit 3. In a non-braking state, a contact point between the cam 43 and the braking unit 3 is C (as shown by a solid line). When the cam 43 rotates around O₁ with the rotation shaft 42 until the contact point between the braking unit 3 and the cam 43 is C' (as shown by a dashed line), a distance between the point C' and the point C is H. In other words, in the rotation process of the cam 43, the braking unit 3 implements linear displacement with a distance of H in the first direction X.

For a structure of the braking unit 3, refer to FIG. 9. The braking unit 3 includes a gain bridge 31 and a friction plate 32. The two braking units 3 are arranged in the first direction X, and a braking gap W is formed between the two braking units 3. The braking gap W can be extended by a part of the brake disc 20. For each braking unit 3, the friction plate 32 is disposed on a side that is of the gain bridge 31 and that faces the braking gap W, so that the braking gap W is formed between the two friction plates 32. A side that is of the gain bridge 31 and that is away from the friction plate 32 has a contact area Q, and the contact area Q is configured to contact an edge of the cam 43 of the crankshaft unit 4. In other words, in a group of the crankshaft unit 4 and the braking unit 3 that correspond to each other, the cam 43 of the crankshaft unit 4 is located on a side that is of the gain bridge 31 and that is away from the braking gap W. Therefore, when the crankshaft unit 4 rotates, the cam 43 can drive the gain bridge 31 and the friction plate 32 to move towards one side of the braking gap W. When the two crankshaft units 4 rotate at the same time, and simultaneously drive the gain bridges 31 and the friction plates 32 to move towards the sides of the braking gap W, the two friction plates 32 approach each other. To implement structural recovery between the two braking units 3, a second resilient element 62 is connected between the two braking units 3. When the two braking units 3 are driven by the cams 43 of the two crankshaft units 4 to approach each other in the first direction X, the second resilient element 62 accumulates elastic potential energy. In a non-braking state, the cam 43 of the crankshaft unit 4 rotates until no driving force for driving the braking unit 3 is generated, and the elastic potential energy accumulated by the second resilient element 62 is released to drive the two braking units 3 to be away from each other to the original state. In the entire process, the contact area Q on the braking unit 3 is always in contact with the edge of the cam 43 of the crankshaft unit 4.

The second resilient element 62 is C-shaped. In the second direction Y, a front end and a rear end of each of the two braking units 3 each are connected to one second resilient element 62. That is, two second resilient elements 62 are arranged in the second direction Y. A stable resilient force can be provided for the two braking units 3, to ensure that the two braking units 3 remain stable in a structure restoration process.

In this embodiment of this application, in the braking process, the drive unit 2 drives, through the connecting rod assembly 5, the two crankshaft units 4 to rotate. In this way, the cam 43 can rotate as shown in FIG. 8, so that the braking unit 3 is driven to implement linear displacement as shown in FIG. 8. With reference to the braking mechanism 10 shown in FIG. 2, it can be learned that, in the braking state, the two crankshaft units 4 can be simultaneously driven by the connecting rod assembly 5 to rotate (where rotation directions of the two crankshaft units 4 are opposite), so that the two braking units 3 approach each other in the first direction, and clamp the brake disc 20 to implement braking.

In a specific working process, the two crankshaft units 4 are configured to drive the two braking units 3 to approach each other in the first direction X. If friction forces between the two braking units 3 and the brake disc 20 are uneven, or there is a dimension tolerance between components of a transmission assembly 5, routes of the two transmission arms 41 may be different, affecting braking effects of the braking units 3 on the brake disc 20. The two transmission arms 41 generate different reverse acting forces on the two connecting arms 541 of the balance bar 54. The acting forces can drive the balance bar 54 to rotate freely around the second axis L2, to compensate for the foregoing error. In this way, forces distributed by the balance bar 54 to the two crankshaft units 4 remain equal. This ensures that friction forces of the two braking units 3 on the brake disc 20 remain the same. According to a structure of the balance bar 54, a reasonable force exerted on the fixed caliper 1 and reasonable braking force distribution can be ensured. This can avoid eccentric wear of the friction plate 32 of the braking unit 3 and fatigue damage of the fixed caliper 1, thereby improving reliability and a service life of the mechanical structure.

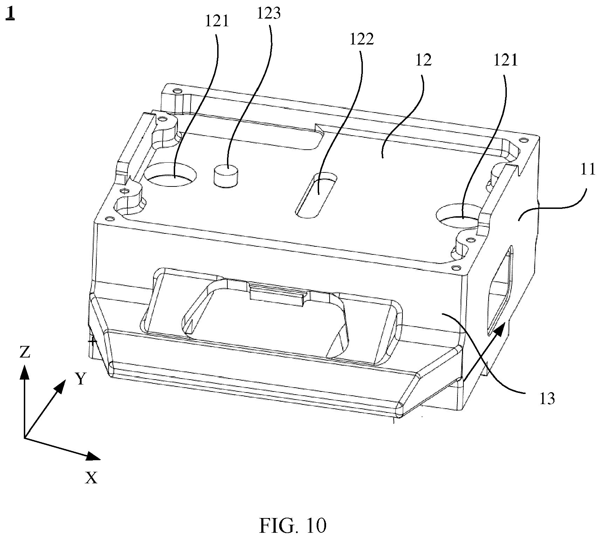

With reference to FIG. 2, for a structure of the fixed caliper 1, refer to FIG. 10. The fixed caliper 1 is of a frame structure, and has two side panels 11 (where one of the side panels 11 is shown herein due to a limited angle of view). A top panel 12 and a front panel 13 are connected between the two side panels 11. Space between the two side panels 11 may be used to install the foregoing two braking units 3. Two mounting holes 121 are disposed on the top panel 12, and the two mounting holes 121 respectively correspond to the two crankshaft units 4. Each crankshaft unit 4 can enter the fixed caliper 1 through the corresponding mounting hole 121, so that the cam 43 of the crankshaft unit 4 can press against the contact area Q on the braking unit 3 in the fixed caliper 1. A sliding slot 122 and a rotating shaft 123 are further disposed between the two mounting holes 121. The sliding slot 122 extends in the second direction Y, and the hinged shaft 7 of the balance bar 54 can penetrate into the sliding slot 122. The hinged shaft 7 can slide in the sliding slot 122 in the second direction Y, and can further rotate around an axis of the hinged shaft 7 in the sliding slot 122. The rotating shaft 123 is configured to cooperate with the hinge hole 531 of the yoke lever 53. The hinge hole 531 of the yoke lever 53 is sleeved on the rotating shaft 123, so that the yoke lever 53 can rotate around the rotating shaft 123 (where an axis of the rotating shaft 123 is collinear with the third axis L3).

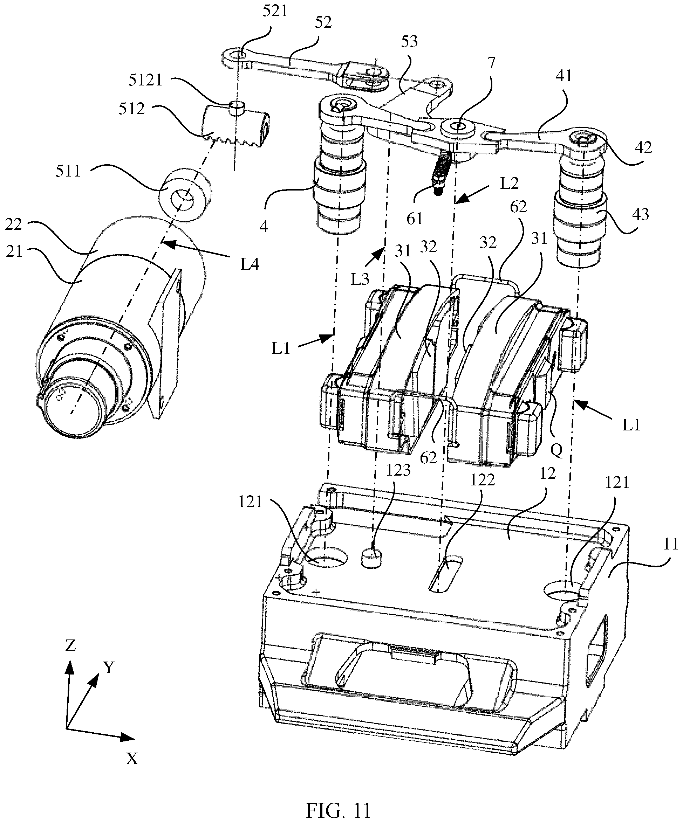

For descriptions of a structure of each component of the braking mechanism 10 provided in this application with reference to the foregoing embodiment, refer to an exploded view of the braking mechanism 10 shown in FIG. 11. The fixed caliper 1 is used as a reference. The motor 1 is fixed to the fixed caliper 1, and positions of the first axis L1 and the third axis L3 are fixed relative to a position of the fixed caliper. The motor 21, the speed reducer 22, and the transmission gear 511 are coaxially in transmission connection with each other in sequence, and the transmission gear 511 can rotate around an axis of the transmission gear 511. An included angle between a rotation center L4 of the power output shaft of the motor 21 and the first direction X is greater than or equal to 70°. In other words, the rotation center L4 of the power output shaft of the motor 21 is parallel to the surface e of the brake disc 20 (where with reference to FIG. 1, the surface e of the brake disc 20 is parallel to the second direction Y and the third direction Z in FIG. 11). The arrangement manner can save space, and facilitate installation and arrangement of the entire braking mechanism 10. The transmission gear 511 is engaged with the transmission rack 512, and can drive the transmission rack 512 to implement a linear motion. The yoke lever 53 is hinged to the rotating shaft 123 on the fixed caliper 1, and the axis of the rotating shaft 123 is collinear with the third axis L3. The transmission rack 512 can drive, through the connecting rod 52, the yoke lever 53 to rotate around the third axis L3. The balance bar 54 is hinged to the yoke lever 53 through the hinged shaft 7, and the hinged shaft 7 penetrates into the sliding slot 122 on the fixed caliper 1. The hinged shaft 7 can rotate around the second axis L2 in the sliding slot 122 while implementing a linear motion in the second direction in the sliding slot 122. The yoke lever 53 drives, through the hinged shaft 7, the balance bar 54 to move in the second direction Y relative to the fixed caliper 1. The movement of the balance bar 54 relative to the fixed caliper 1 enables the first resilient element 61 to accumulate elastic potential energy, so that when the motor 21 stops driving, the first resilient element 61 can drive the balance bar 54 to reset. The movement of the balance bar 54 can drive the two crankshaft units 4 to rotate around first axes L1 corresponding to the two crankshaft units 4. Each crankshaft unit 4 rotates around the first axis L1 corresponding to the crankshaft unit 4, to drive the cam 43 to rotate around the first axis L1. The rotation of the cam 43 pushes the contact area contact surface Q on the gain bridge 31 of the braking unit 3 through an outer profile of the cam 43, to generate a linear motion in the first direction X. The two braking units 3 are driven to generate an action of approaching each other, so that the two friction plates 32 can clamp the brake disc 20, to achieve a braking effect. In the braking process, the second resilient element 62 connected between the two braking units 3 is compressed to generate elastic potential energy. When the motor 21 stops, a driving force disappears, the balance bar 54 is reset under the driving of the first resilient element 61, and the two crankshaft units 4 are also reset accordingly. The second resilient element 62 releases the elastic potential energy, and drives the two braking units 3 to be away from each other in the first direction X and finally reset, so that the braking gap W between the two braking units 3 is ensured.

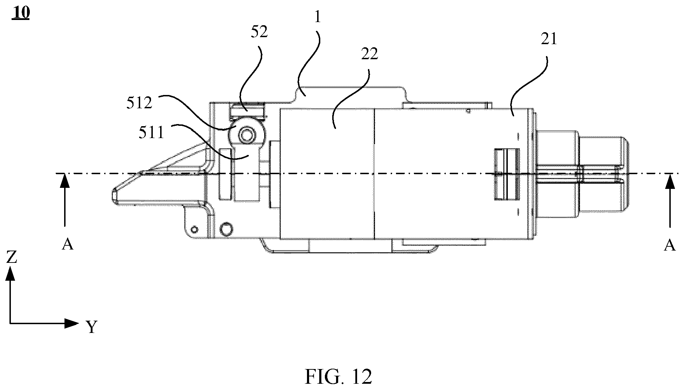

Refer to a left view of the braking mechanism 10 shown in FIG. 12. It can be learned that the motor 21, the speed reducer 22, and the transmission gear 511 are in transmission connection in the second direction Y in sequence. The transmission gear 511 is engaged with the transmission rack 512, and can convert, into a linear motion of the connecting rod 52, a rotational motion output by the motor 21.

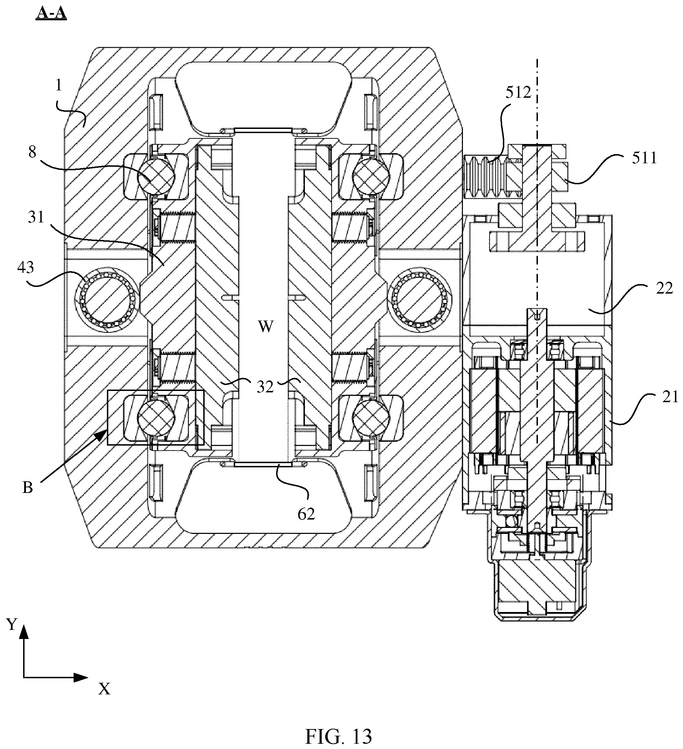

With reference to a surface A-A in FIG. 12, refer to a schematic diagram of a cross-sectional structure of the braking mechanism 10 shown in FIG. 13. The cross-section is parallel to a plane formed in the first direction X and the second direction Y A rolling element 8 is disposed between the fixed caliper 1 and the gain bridge 31. Based on this application, two braking units 3 are disposed; and two rolling elements 8 are disposed between a gain bridge 31 of each braking unit 3 and the fixed caliper 1, and are arranged in the second direction Y.

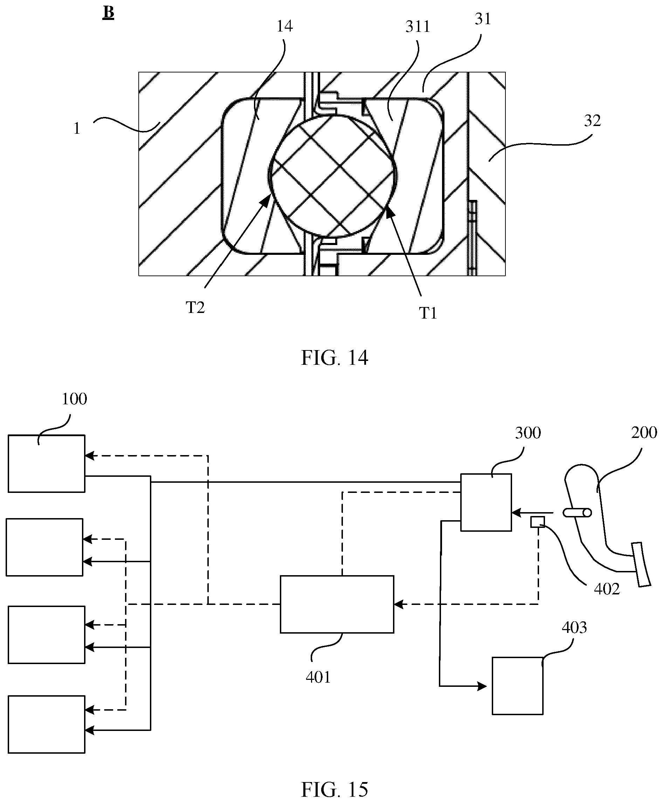

With reference to an enlarged view FIG. 14 of a part B in FIG. 13, for any rolling element 8, a first gain block 311 is disposed on a side that is of the gain bridge 32 and that faces the fixed caliper 1, and a second gain block 14 is disposed on a side that is of the fixed caliper 1 and that faces the gain bridge 31. A first V-shaped groove T1 is formed on a surface that is of the first gain block 311 and that faces the fixed caliper 1, and a second V-shaped groove T2 is formed on a surface that is of the second gain block 14 and that faces the gain bridge 31. An angle of the first V-shaped groove T1 is the same as an angle of the second V-shaped groove T2. The first V-shaped groove T1 and the second V-shaped groove T2 cooperate to form a groove body configured to accommodate the rolling element 8. The rolling element 8 is located in the groove body, and separately presses against surfaces of the first V-shaped groove T1 and the second V-shaped groove T2. In the non-braking state, the rolling element 8 is located at the lowest positions of the first V-shaped groove T1 and the second V-shaped groove T2. When the drive unit 2 drives, through the connecting rod assembly 5 and the crankshaft unit 4, the two braking units 3 to implement an opposite motion (that is, the two braking units 3 approach each other), the friction plate 32 squeezes the brake disc 20 having a rotational motion or a rotating trend. A friction force is generated between the brake disc 20 and the friction plate 32, and drives the friction plate 32 to have a circumferential rotating trend. The friction plate 32 drives, through the first gain block 311, the rolling element 8 to roll in the second direction Y. To be specific, the rolling element 8 moves towards a relatively small distance between the first V-shaped groove T1 and the second V-shaped groove T2. Because the fixed caliper 1 has a stable structure, the rolling element 8 reversely acts on the gain bridge 31, so that the gain bridge 31 further exerts a force on the friction plate 32, the friction plate 32 generates a greater clamping force on the brake disc 20, and the friction force between the friction plate 32 and the brake disc 20 is greater. The fixed caliper 1 is fixed, and the first gain block 13 is fixed to the fixed caliper 1. In the non-braking state, the braking unit 3 is also fixed relative to the fixed caliper 1, and a distance between the two braking units 3 is fixed. In other words, in the non-braking state, the structure of the entire braking mechanism 10 is relatively stable, and this stable structure can improve reliability of the entire structure. When a vehicle body vibrates, the braking unit 3 is not pushed to the brake disc 20 to generate a drag torque, which helps implement zero drag.

Herein, the first V-shaped groove T1, the second V-shaped groove T2, and the rolling element 8 may be considered as a gain component. The gain component gain structure may form joint braking on the brake disc 20 with the braking mechanism driven by the motor 21, to reduce a power requirement and a current requirement of the motor 21, thereby reducing power, the size, the weight, and costs of the entire power system. A gain ratio of the gain component is µ × tanγ/(tanγ - µ). In the formula, µ is a friction coefficient of the friction plate 32, and γ is angles of the first V-shaped groove T1 and the second V-shaped groove T2. It can be learned that a gain provided by the gain component in this embodiment of this application is a linear gain. When a material specification of the friction plate 32 and the angle of the V-shaped groove are determined, the gain ratio is a constant. The structure can meet complex braking adjustment and auxiliary functions of an antilock brake system (antilock brake system, ABS) and an electronic stability control system (electronic stability controller, ESC).

In conclusion, the braking mechanism 10 provided in this embodiment of this application has a more stable and reliable structure, and can implement zero drag during braking. An entire braking power transmission chain also has a simple structure, and power can be evenly distributed to the two braking units 3, to avoid wear of the brake disc 20 and fatigue damage of the fixed caliper 1. The braking mechanism 10 implements braking in a pure mechanical manner, but a braking effect can still be achieved when an electrical fault occurs in the system.

Based on the foregoing mechanical brake, an embodiment of this application further provides an electronic mechanical braking system. Refer to FIG. 15. The electronic mechanical braking system includes a braking pedal 200, an electronic braking mechanism 400, a switching mechanism 300, and the foregoing mechanical brake 100. The electronic braking mechanism 400 may include a controller 401, an electronic signal sensor 402, and a feedback mechanism 403. The switching mechanism 300 has a first state and a second state. When the electronic braking mechanism 400 works normally, the switching mechanism 300 is in the first state. When the electronic braking mechanism 400 cannot work normally, the switching mechanism 300 is in the second state. The feedback mechanism 403 can be in transmission connection with the braking pedal 200 when the switching mechanism 300 is in the first state. When the braking pedal 200 is stepped on by a driver, the feedback mechanism 403 can generate an action force similar to braking, to improve experience and a sense of reality of the driver. Specifically, when the switching mechanism 300 is in the first state, the electronic signal sensor 402 can receive a braking signal of the braking pedal 200, and transmit the braking signal to the controller 401, so that the controller 401 can control braking of the brake 100 based on the braking signal. When the switching mechanism 300 is in the second state, the braking pedal 200 can enable the brake 100 to perform braking by using a transmission system. When the switching mechanism 300 is in the first state, the electronic braking mechanism 400 works normally. When the switching mechanism 300 is in the second state, the electronic braking mechanism 400 cannot work normally. It can be learned that, when the electronic braking mechanism 400 cannot work normally, the mechanical brake 100 can brake a traveling vehicle, to ensure safety performance of the traveling vehicle. In addition, the structure of the electronic mechanical braking system is more reliable and stable during braking, so that zero drag can be implemented.

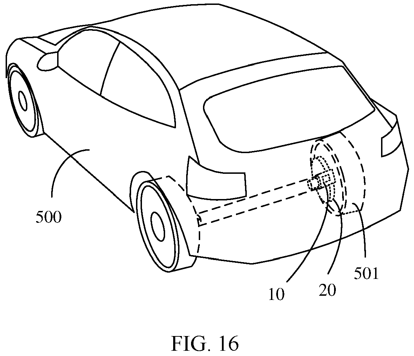

As shown in FIG. 16, based on the foregoing electronic mechanical braking system, an embodiment of this application may further provide a vehicle. A vehicle body 500 of the vehicle is loaded with the foregoing electronic mechanical braking system, and the electronic mechanical braking system can be installed on a wheel hub 501 of the vehicle. Specifically, in the electronic mechanical braking system, a brake disc 20 of a mechanical brake 100 is connected to the wheel hub 401, and a fixed caliper 1 of a braking mechanism 10 is fixed to the vehicle body 500. When the electronic mechanical braking system is in a braking state, the braking mechanism 10 acts to enable two braking units 3 to clamp the brake disc 20, and the brake disc 20 can implement braking parking by braking the wheel hub 501. A working principle and a process of the mechanical brake 100 are described in detail in the foregoing document. Details are not described herein again. It should be understood that, when the vehicle brakes, all beneficial effects of the foregoing mechanical braking system can be achieved.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A braking mechanism for braking a brake disc of a mechanical brake, comprising:
a fixed caliper;
two braking units, wherein the two braking units are arranged in a first direction, and a braking gap used by a part of the brake disc for extending is formed between the two braking units; each braking unit is movably installed on the fixed caliper in the first direction; and the first direction is parallel to an axis direction of the brake disc;
two crankshaft units that are in a one-to-one correspondence with the two braking units, wherein in each group of the braking unit and the crankshaft unit that correspond to each other, the crankshaft unit is located on a side that is of the braking unit and that is away from the braking gap, and the crankshaft unit is rotatably installed on the fixed caliper around a first axis; and the first axis is perpendicular to the first direction; and
a drive unit, wherein the drive unit is fixed to the fixed caliper, and the drive unit is in transmission connection with the two crankshaft units through a connecting rod assembly, to drive the two crankshaft units to rotate; and when the two crankshaft units rotate, the two braking units are driven to move oppositely at the same time to approach each other.

2. The braking mechanism according to claim 1, wherein the connecting rod assembly comprises a transmission pair, a connecting rod, a yoke lever, and a balance bar that are in transmission connection with each other in sequence;
the balance bar is rotatable around a second axis, and is movably installed on the fixed caliper in a second direction, and two ends of the balance bar are respectively hinged to the two crankshaft units; the second axis is parallel to the first axis; and the second direction is perpendicular to the first direction;
the yoke lever is rotatably installed on the fixed caliper around a third axis; the third axis is parallel to the first axis; and the yoke lever is hinged to the balance bar, and a hinged point between the balance bar and the yoke lever coincides with the second axis; and
one end of the transmission pair is in transmission connection with the drive unit, and the other end of the transmission pair is hinged to the yoke lever through the connecting rod.

3. The braking mechanism according to claim 2, wherein the balance bar has two symmetrical connecting arms, and the two connecting arms are hinged to the two crankshaft units in a one-to-one correspondence; and distances between the second axis and hinged points between the two connecting arms and the corresponding crankshaft units are equal.

4. The braking mechanism according to claim 3, wherein between the connecting arm and the crankshaft unit that are hinged to each other, the connecting arm has a hinged semi-ring, the crankshaft unit has a hinged flange, and the hinged flange rotates and cooperates with an inner surface of the hinged semi-ring.

5. The braking mechanism according to any one of claims 2 to 4, wherein a first resilient element is connected between the balance bar and the fixed caliper.

6. The braking mechanism according to any one of claims 2 to 5, wherein the drive unit comprises a motor and a speed reducer; and
the motor is fixed to the fixed caliper; and the speed reducer is coaxially connected to a power output shaft of the motor, and the speed reducer is connected to the transmission pair.

7. The braking mechanism according to claim 6, wherein the transmission pair is a gear rack assembly or a worm gear assembly.

8. The braking mechanism according to claim 6 or 7, wherein an included angle between a rotation center of the power output shaft of the motor and the first direction is greater than or equal to 70°.

9. The braking mechanism according to any one of claims 1 to 8, wherein each crankshaft unit comprises a transmission arm, a rotation shaft, and a cam;
the rotation shaft is rotatably installed on the fixed caliper around the first axis;
one end of the transmission arm is hinged to the connecting rod assembly, and the other end is fixed to the rotation shaft; and
the cam is fixed to the rotation shaft, and there is a preset distance between a geometric center of the cam and the first axis; and a circumferential surface of the cam presses against the braking unit.

10. The braking mechanism according to any one of claims 1 to 9, wherein a second resilient element is connected between the two braking units.

11. The braking mechanism according to any one of claims 1 to 10, wherein a gain component is disposed between each braking unit and the fixed caliper; and the gain component comprises a first V-shaped groove, a second V-shaped groove, and a rolling element; and
the first V-shaped groove is disposed on a side that is of the braking unit and that faces the fixed caliper, the second V-shaped groove is disposed on a side that is of the fixed caliper and that faces the braking unit, and the rolling element is disposed between the first V-shaped groove and the second V-shaped groove.

12. The braking mechanism according to any one of claims 1 to 11, wherein each braking unit comprises a gain bridge and a friction plate; and
the gain bridge is movably installed on the fixed caliper in the first direction, and the friction plate is fixed to a side that is of the gain bridge and that faces the braking gap; and the crankshaft unit presses against a side that is of the gain bridge and that is away from the friction plate.

13. A mechanical brake, comprising a brake disc and the braking mechanism according to any one of claims 1 to 12, wherein
a part of the brake disc extends into a fixed caliper, and is located in a braking gap between two braking units.

14. An electronic mechanical braking system, comprising a braking pedal, an electronic braking mechanism, a switching mechanism, and the mechanical brake according to claim 13, wherein
the electronic braking mechanism is signal-connected to each of the braking pedal, the mechanical brake, and the switching mechanism, to control braking of the mechanical brake based on signals of the braking pedal and the switching mechanism.

15. A vehicle, comprising a vehicle body, wheel hubs, and the electronic mechanical braking system according to claim 14, wherein
a fixed caliper is fixed to the vehicle body, and a brake disc is fixed to a wheel hub.
